**Europäisches Patentamt**

**European Patent Office**

**Office européen des brevets**

(19)

(11) Veröffentlichungsnummer: **0 047 951**
A2

(12) # EUROPÄISCHE PATENTANMELDUNG

(21) Anmeldenummer: **81107003.6**

(22) Anmeldetag: **07.09.81**

(51) Int. Cl.³: **B 62 B 5/02**

(30) Priorität: **16.09.80 IT 1265380**

(43) Veröffentlichungstag der Anmeldung:
**24.03.82 Patentblatt 82/12**

(84) Benannte Vertragsstaaten:
**AT BE CH DE FR GB LI LU NL SE**

(71) Anmelder: **Bocciardo, Paolo**
**Via Duca degli Abruzzi 41**
**I-16034 Portofino(IT)**

(72) Erfinder: **Bocciardo, Paolo**
**Via Duca degli Abruzzi 41**
**I-16034 Portofino(IT)**

(74) Vertreter: **Porsia, Dino, Dr.**
**c/o Succ. Ing. Fischetti & Weber Via Caffaro 3**
**I-16124 Genova(IT)**

(54) **Schubkarrenartige Handkarre mit motorangetriebenem Raupenfahrwerk.**

(57) Zur bequemeren Lenkung und zum Befahren von sowohl ansteigenden als auch absteigenden Treppen weist das motorangetriebene Raupenfahrwerk einer schubkarrenartigen Handkarre eine einzige untere, mittig angeordnete Laufrolle (10) mit mindestens einer um diese herumgeführten Raupe (9) und sowohl vor als auch hinter dieser Laufrolle (10) geneigte, sich V-förmig nach oben erstreckende Raupenabschnitte auf.

Fig 1

EP 0 047 951 A2

Paolo BOCCIARDO,
in Portofino (Italien).

## Schubkarrenartige Handkarre mit motorangetriebenem Raupenfahrwerk.

Die Erfindung betrifft eine schubkarrenartige Handkarre mit motorangetriebenem Raupenfahrwerk, das zur Überwindung von Treppen und anderen stufenförmigen Hindernissen ausgebildet ist.

Aufgabe der Erfindung ist es, eine Handkarre dieser Art zu schaffen, die den Transport von Gütern, insbesondere von Baumaterialien, landwirtschaftlichen Erzeugnissen, landwirt= schaftlichen Hilfsmaterialien u. dgl. auf besonders schmalen Strassen bzw. Pfäden auch auf schwer befahrbarem, insbesondere gebirgigem Gelände ermöglicht und dabei in Verbindung mit einer einfachen, leicht herstellbaren, kostensparenden Konstruktion einerseits bequem und nur mit Hilfe der Lenk= stangen bzw. Handgriffe ohne besondere Schaltbewegungen lenkbar ist und andererseits Treppenstufen oder andere ähnliche Hindernisse ebenfalls ohne besondere, etwa zur Verstellung bzw. Umschaltung von beweglichen Laufwerkteilen oder Hilfsvorrichtungen dienenden Steuerbewegungen sowohl in ansteigender als auch in absteigender Richtung mühelos überwinden kann.

Diese Aufgabe wird erfindungsgemäss dadurch gelöst, dass das Raupenfahrwerk eine einzige, untere, mittig angeordnete Laufrolle mit mindestens einer um diese herumgeführten Raupe und sowohl auf der Vorderseite als auch auf der Hinterseite dieser Laufrolle geneigte, sich V-förmig nach oben erstreckende Raupenabschnitte aufweist.

Die erfindungsgemäss ausgebildete Handkarre wird von einer einzigen Laufrolle unter Zwischenschaltung mindestens einer motorangetriebenen Raupe abgestützt, wobei der Bodenkontakt im Bereich dieser Laufrolle auf mindestens einem schmalen, streifenförmigen, quergerichteten Raupenstreifen beschränkt ist. Infolgedessen kann die Handkarre trotz der Anordnung des Raupenfahrwerks leicht und bequem nur mit Hilfe von Lenkstangen bzw. Handgriffen, d.h. etwa wie die herkömmlichen, einrädigen Handschubkarren ohne das lästige Ein- und Ausschalten von Brems- und Kupplungsvorrichtungen geführt und gelenkt werden. Gleichzeitig ermöglichen die beiden geneigten, sich von der Laufrolle nach vorn und nach hinten aufwärts erstreckenden, d.h. V-förmig angeordneten Raupenabschnitte ein müheloses Überwinden von sowohl ansteigenden als auch absteigenden Treppen bzw. anderen ähnlichen Hindernissen, ebenfalls ohne Schalt- oder Steuereingriffe zur Verstellung bzw. Umschaltung von besonderen, beweglichen Laufwerkteilen, Hilfsvorrichtungen od. dgl. Die erfindungsgemässe schubkarrenartige Handkarre ist also trotz Beibehaltung der bekannten Vorteile der Raupenfahrwerke leicht und bequem lenkbar und auf Treppen od. dgl. sowohl nach oben als auch nach unten verfahrbar und erfordert dabei - abge= sehen von der Steuerung des Antriebsmotors - keine kompli= ziertere Bedienung als diejenige einer herkömmlichen Hand= schubkarre. Infolgedessen kann die erfindungsgemässe Hand= karre gleichzeitig auch eine entsprechend einfache, leicht herstellbare, kostengünstige bauliche Ausbildung aufweisen.

In einer vorteilhaften Ausführungsform der erfindungsgemässen Handkarre ist eine einzige endlose Raupe auf einer dreieck= förmigen Umlaufbahn um die mittlere untere Laufrolle und um zwei obere, im Abstand voneinander und von der Laufrolle angeordnete Umlenkrollen umgeführt, wobei die sich von der Laufrolle beiderseits nach oben erstreckenden Seiten der dreieckförmigen Raupenumlaufbahn die V-förmig angeordneten Raupenabschnitte des Raupenfahrwerks bilden und mindestens eine Umlenkrolle als Antriebsrolle ausgebildet ist. Diese Ausbildung der erfindungsgemässen Handkarre ist baulich besonders einfach, kompakt und platzsparend.

Bei einer Ausführungsvariante der erfindungsgemässen Hand= karre sind um die mittlere untere Laufrolle mindestens zwei endlose nebeneinanderliegende Einzelraupen herumgeführt, von denen mindestens eine um eine höher liegende, nach vorn versetzte Umlenkrolle und mindestens eine um eine höher liegende, nach hinten versetzte Umlenkrolle umgeführt sind, wobei diese geneigte Einzelraupen die V-förmig angeordneten Raupenabschnitte des Raupenfahrwerks bilden und mindestens eine Umlenkrolle als Antriebsrolle ausgebildet ist. Der Vorteil dieser Ausführungsvariante liegt darin, dass der obere waagerechte Abschnitt der einzigen, endlosen, auf einer dreieckförmigen Laufbahn geführten Raupe der ersten Ausführungsform wegfällt und der über der Laufrolle liegende Raum zwischen den beiden V-förmig geneigten Raupenabschnitten durchgehend frei ausgenutzt werden kann.

Vorzugsweise sind die beiden oberen Umlenkrollen der einzigen, endlosen, auf einer dreieckförmigen Laufbahn geführten Raupe bzw. der beiden geneigten, die V-förmig angeordneten Raupenabschnitte bildenden Einzelraupen etwa in der selben Höhe und in gleichen Abständen von der senkrechten, durch die Achse der Laufrolle gehenden Querebene angeordnet, so dass die Umlaufbahn der einzigen Raupe die Form eines gleichschenkligen, mit seinem Scheitel nach unten gerichteten Dreiecks aufweist, bzw. die beiden geneigten Einzelraupen ein gleichschenkliges V bilden.

Die derart ausgebildete erfindungsgemässe Handkarre ist gewichtsmässig besonders gut ausbalanciert und kann infolgedessen besonders leicht d.h. mit sehr geringem Kraftaufwand handmässig geführt und gelenkt werden.

Nach einem weiteren vorteilhaften Merkmal der Erfindung ist das Antriebsaggregat (Antriebsmotor und Getriebe) des Raupenfahrwerks in dem Raum zwischen den beiden geneigten, ausgehend von der Laufrolle V-förmig nach oben gerichteten Raupenabschnitten angeordnet. Diese Anordnung des Antriebsaggregats ist für die Stabilität der Handkarre besonders günstig und nutzt - insbesondere im Falle einer einzigen, auf einer dreieckförmigen Umlaufbahn geführten Raupe - den vorhandenen Platz besonders gut aus. Trotzdem ist das Antriebsaggregat beiderseitig in allen seinen Teilen bequem zugänglich.

Jede Raupe des erfindungsgemässen Handkarrens kann beliebig, insbesondere entweder als Kettenraupe oder als Riemenraupe ausgebildet sein. Nach einem weiteren vorteilhaften Merkmal der Erfindung ist jedoch jede Raupe des erfindungsgemässen Handkarrens als Riemenraupe mit im Querschnitt konvex bogenförmigem Aussenprofil ausgebildet. Bei dieser Aus= führungsform steht die erfindungsgemässe Handkarre im Bereich ihrer einzigen Laufrolle entweder über ein einziges konvex bogenförmiges Raupenprofil, oder über mindestens zwei nebeneinanderliegende, konvex bogenförmige Raupenprofile theoretisch in einem einzigen Stützpunkt bzw. in mindestens zwei nebeneinanderliegenden Stützpunkten, praktisch in einer einzigen, sehr kleinen Stützfläche bzw. in mindestens zwei sehr kleinen Stützflächen mit dem Boden in Berührung. Dadurch wird die bequeme schaltungslose Handlenkung des erfindungsgemässen Handkarrens weiterhin erleichtert.

Vorzugsweise ist jede Riemenraupe des erfindungsgemässen Handkarrens auf ihrer Aussenseite gezähnt und auf ihrer Innseite mit quergerichteten Kerben bzw. Nuten zur Erhöhung der Biegsamkeit versehen. Vorzugsweise weist ausserdem jede Riemenraupe auf ihrer Innenseite eine mittlere, im Quer= schnitt trapezförmige Längsrippe auf, mit der sie keil= riemenartig in eine entsprechende, im Querschnitt trapez= förmige Umfangsnut der Laufrolle und der Umlenkrolle bzw.

der Umlenkrollen greift.

Der Kasten der erfindungsgemässen Handkarre kann vorzugs=
weise einen passenden Flüssigkeitsbehälter aufnehmen oder
zumindest teilweise durch einen solchen ersetzt werden.
Dabei ist vorzugsweise das Antriebsaggregat des Raupenfahr=
werks mit einer Zapfwelle versehen, mit der beliebige Vor=
richtungen, insbesondere eine z.B. aussen am Antriebs=
aggregat des Handkarrens befestigbare Pumpe gekuppelt
werden können. Bei dieser Ausbildung kann die erfindungs=
gemässe Handkarre nicht nur zum Transport von Wasser oder
anderen, z.B. in der Landwirtschaft benutzten Flüssigkeiten,
sondern auch zum Zerstäuben bzw. Verspritzen dieser Flüssig=
keiten mit Hilfe der angebrachten Pumpe eingesetzt werden.

Weitere Merkmale und Vorteile der Erfindung ergeben sich
aus den Unteransprüchen und aus nachstehender Beschreibung
eines in der Zeichnung schematisch dargestellten Ausführungs=
beispiels.

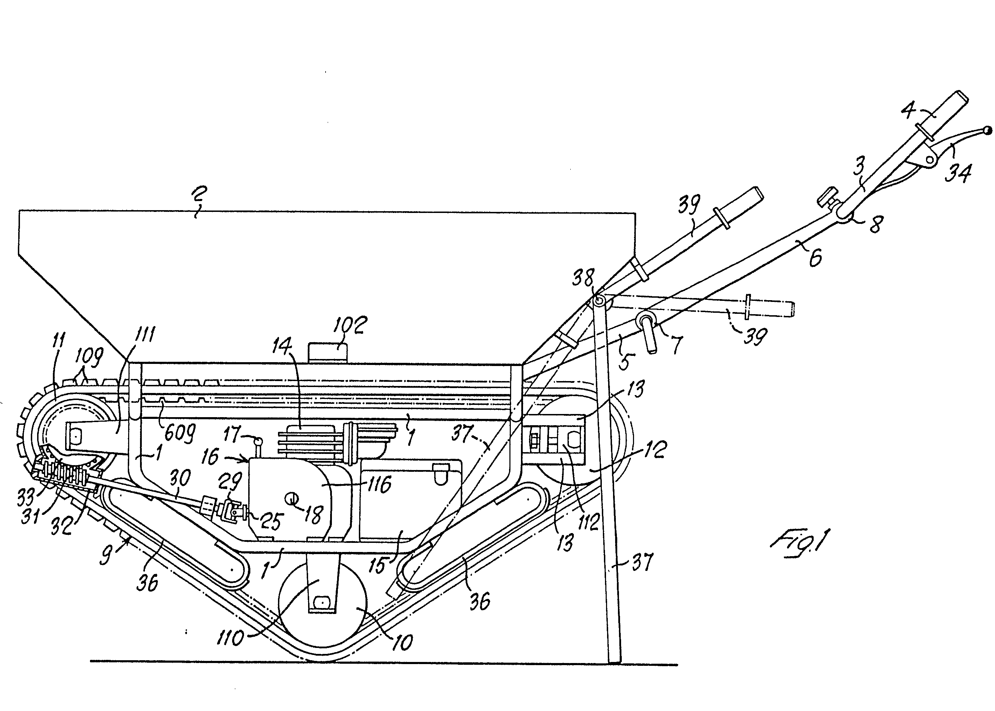

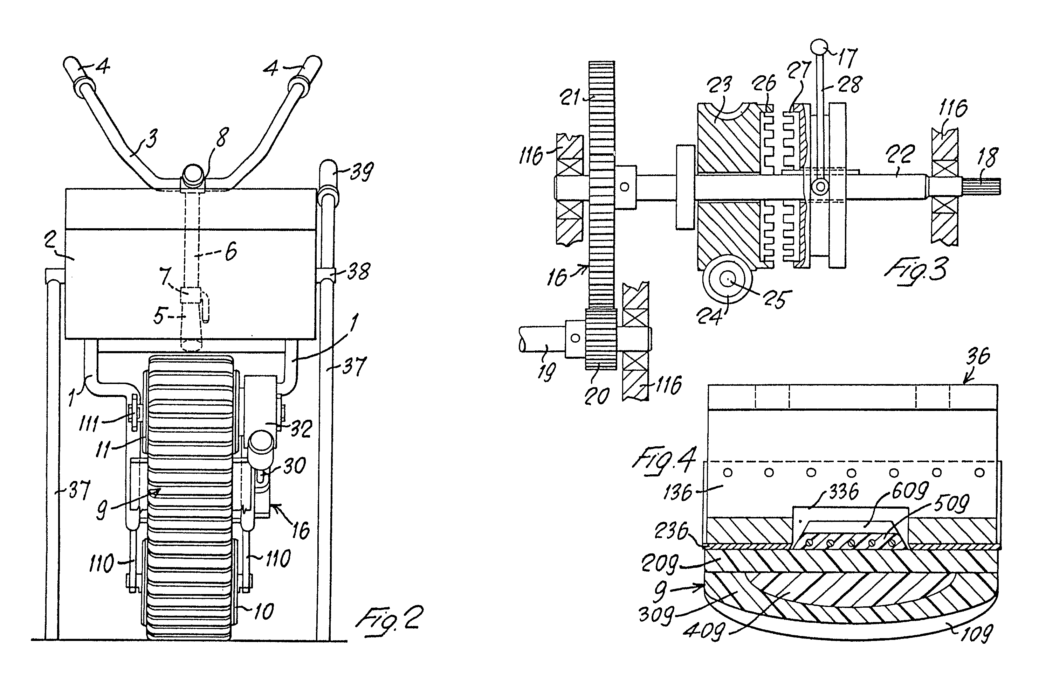

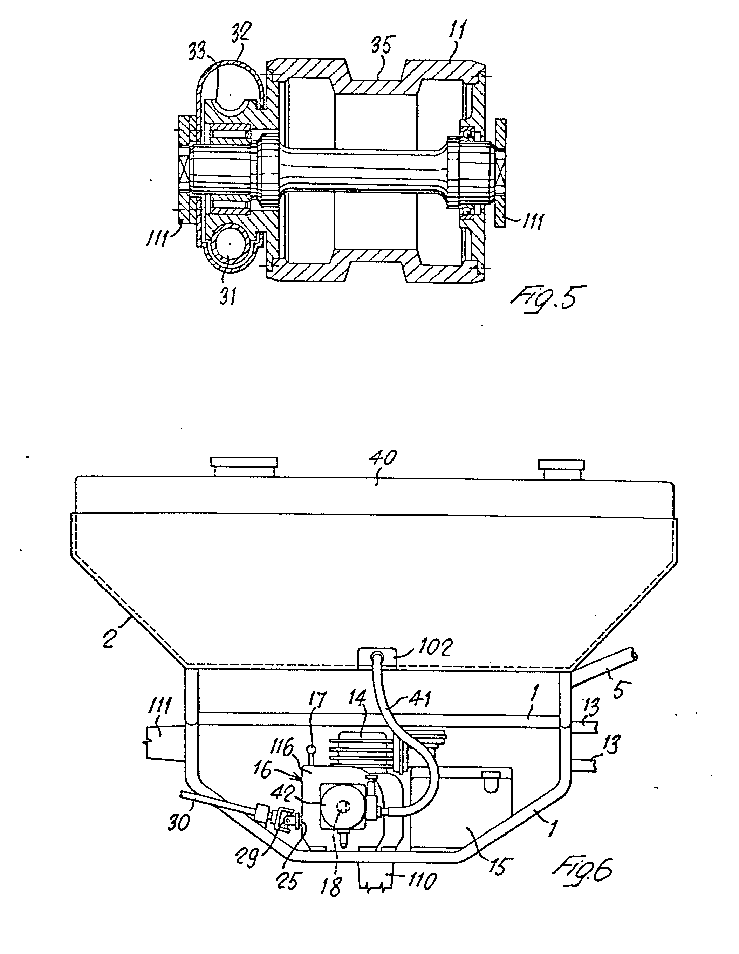

Fig. 1 zeigt eine erfindungsgemässe Handkarre mit
motorangetriebenem Raupenfahrwerk, in seitlichem
Aufriss; Fig. 2 zeigt die Handkarre nach Fig. 1 in
Vorderansicht; Fig. 3 zeigt das Schaltgetriebe zwi=
schen Motorwelle, Raupenfahrwerk und Zapfwelle des
Antriebsaggregats; Fig. 4 ist ein Querschnitt durch
die Riemenraupe des Raupenfahrwerks im Bereich der
Gleitführung eines geneigten Abschnitts dieser
Riemenraupe; Fig. 5 ist ein Längsschnitt durch die
als Antriebsrolle ausgebildete Umlenkrolle der

Riemenraupe; Fig. 6 zeigt die Handkarre nach Fig. 1 in teilweisem seitlichem Aufriss mit im Kasten ange= ordnetem, an einer Pumpe angeschlossenem Flüssigkeits= behälter.

Die dargestellte Handkarre weist einen vorzugsweise aus Stahlrohren zusammengesetzten Fahrwerkrahmen 1 auf, auf dem der Kasten 2 befestigt ist. An dem in Bezug auf die Fahr= richtung hinteren Ende des Fahrwerkrahmens 1 ist über eine Verbindungsstange 5 und eine Zwischenstange 6 eine Lenkstange 3 mit zwei Handgriffen 4 befestigt. Die Zwischenstange 6 ist über eine Anlenkvorrichtung 7 winkelverstellbar und in der eingestellten Winkelstellung festspannbar mit dem freien Ende der am Fahrwerkrahmen 1 befestigten Verbindungsstange 5 verbunden. Die Lenkstange 3 ist über eine weitere Anlenk= vorrichtung 8 winkelverstellbar und in der eingestellten Winkelstellung festklemmbar mit dem freien Ende der Zwischen= stange 6 verbunden. Auf diese Weise kann die Stellung der Lenkstange 3 gegenüber dem Fahrwerkrahmen sowohl höhen- als auch winkelmässig abgeändert, eingestellt und den jeweiligen Erfordernissen der Bedienungsperson angepasst werden.

Der Fahrwerkrahmen 1 trägt unterhalb des Kastens 2 ein Raupenfahrwerk, das aus einer einzigen, endlosen Raupe 9 besteht, die auf einer dreieckförmigen Umlaufbahn in einer vertikalen, mittleren Längsebene des Handkarrens geführt ist. Insbesondere ist die Raupe 9 um eine einzige untere Laufrolle 10 und um zwei obere, voneinander und von der Laufrolle 10 abstehende Umlenkrollen 11 und 12 umgeführt. Die untere Laufrolle 10 ist zwischen Lagerlaschen 110 des Fahrwerkrahmens 1 drehbar gelagert und ihre Drehachse liegt etwa in der mittleren Querebene des Kostens 2 bzw. des Fahrwerkrahmens 1. Die beiden oberen Umlenkrollen 11, 12 sind etwa in der selben Höhe und im selben Abstand von der mittleren, durch die Drehachse der Laufrolle 10 verlaufenden Querebene angeordnet. Infolgedessen wird die Raupe 9 auf einer Umlaufbahn geführt, die etwa die Form eines gleichschenk= ligen Dreiecks mit nach unten gerichtetem Scheitel aufweist. Insbesondere weist die Raupe 9 sowohl auf der Vorderseite als auch auf der Hinterseite der mittleren Laufrolle 10 je einen geneigten, sich von der Laufrolle 10 nach oben erstreckenden Raupenabschnitt auf.

Die in der Fahrrichtung hintere, d.h. auf der Seite der Lenkstange 3 liegende Umlenkrolle 12 der Raupe 9 ist als Spannrolle ausgebildet und in einem in Längsführungen 13 des Fahrwerkrahmens 1 verschiebbaren und einstellbaren Lager= block 112 drehbar gelagert. Die entgegengesetzte, d.h. in der Fahrrichtung vordere Umlenkrolle 11 der Raupe 9 ist als Antriebsrolle ausgebildet und zwischen Lagerlaschen 111 des Fahrwerkrahmens 1 drehbar gelagert. Im Fahrwerkrahmen 1 und zwar in dem von der dreieckigen Umlaufbahn der Raupe 9 um= gebenen Raum ist der Antriebsmotor 14 des Raupenfahrwerks zusammen mit dem betreffenden Kraftstoffbehälter 15 ange= ordnet. Der Antriebsmotor 14 treibt über ein Untersetzungs= getriebe 16 mit eingebauter, durch einen Schalthebel 17 aus- und einrückbarer Kupplung die Antriebsrolle 11 und eine seitlich aus dem Getriebekasten 116 vorspringende Zapfwelle 18 an.

Bei dem in Fig. 3 dargestellten Ausführungsbeispiel treibt die Motorwelle 19 des Antriebsmotors 14 über ein Zahnradpaar 20, 21 eine Getriebewelle 22 an, deren Ende als Zapfwelle 18 aus dem Getriebekasten 116 herausgeführt ist. Auf der Getriebewelle 22 ist frei drehbar ein Schneckenrad 23 gela= gert, das über eine zugeordnete Schnecke 24 mit der Aus= gangswelle 25 des Untersetzungsgetriebes 16 getrieblich verbunden ist. Das Schneckenrad 23 kann über eine mit Hilfe des Schalthebels 17 betätigbare Klauenkupplung 26, 27 wahlweise mit der Getriebewelle 22 gekuppelt werden. Die eine Hälfte 26 der Klauenkupplung ist mit dem Schneckenrad 23 drehfest verbunden, während die andere Kupplungshälfte 27 drehfest mit der Getriebewelle 22 verbunden, jedoch auf dieser Welle axial verschiebbar ist. Die axiale Verschiebung der Kupplungshälfte 27 auf der Getriebewelle 22 wird vom Schalthebel 17 in an sich bekannter Weise, z.B. über eine Schaltgabel 28 bewirkt. Die Ausgangswelle 25 des Unter= setzungsgetriebes 16 ist über ein Kardangelenk 29 mit einer Welle 30 verbunden, die über eine Schnecke 31 ein koaxial zur Antriebsrolle 11 angeordnetes, mit dieser drehfest ver= bundenes Schneckenrad 33 antreibt. Die Schnecke 31 und das Schneckenrad 33 sind in einem Gehäuse 32 untergebracht, das an einer Lagerlasche 111 der Antriebsrolle 11 befestigt ist.

In dem oben beschriebenen Ausführungsbeispiel treibt also die Motorwelle 19 des Motors 14 über die Zahnradpaar- -Untersetzung 20, 21 die Getriebewelle 22 und infolgedessen die Zapfwelle 18 dauernd an. Die Antriebsrolle 11 der Raupe 9 kann dagegen wahlweise mit Hilfe des Schalthebels 17 und der Klauenkupplung 26, 27 über eine erste, im Getriebe 16 eingebaute Schneckenuntersetzung 23, 24 und über eine zweite, nachgeschaltete, im Gehäuse 32 untergebrachte Schnecken= untersetzung 31, 33 mit dem Antriebsmotor 14 gekuppelt bzw. von diesem entkuppelt werden. Selbstverständlich ist im Kraftfluss zwischen dem Motor 14 und der Antriebsrolle 11 der Raupe 9 auch eine an sich bekannte, nicht dargestellte, z.B. mit Hilfe eines an einem der Handgriffe 4 der Lenk= stange 3 vorgesehenen Schalthebels 34 aus- und einrückbare Reibungskupplung vorgesehen.

Es ist selbstverständlich möglich, das Getriebe 16 mit einer solchen, mit Hilfe eines Schalthebels 17 steuerbaren Schaltkupplung zu versehen, dass der Antriebsmotor 14 wahl= weise und abwechselnd nur mit der Abzapfwelle 18 und nur mit der Antriebsrolle 11 der Raupe 9 getrieblich verbunden werden kann.

Die Raupe 9 ist als Riemenraupe mit im Querschnitt konvex bogenförmigem Aussenprofil ausgebildet, wie insbesondere in Fig. 4 dargestellt ist. Dabei ist diese Riemenraupe 9 vor= zugsweise aus einem flachen Riemen 209 und einem darauf aussenseitig befestigten, insbesondere geklebten, im Quer= schnitt bogenförmig gewölbten Laufstreifen 309 aus Gummi od. dgl. zusammengesetzt. Der Hohlraum zwischen dem flachen Riemen 209 und dem gewölbten Laufstreifen 309 ist mit einer Einlage 409 aus weichelastischem Gummi gefüllt. Die ausge= wölbte Aussenfläche des Laufstreifens 309 ist mit querge= richteten Zähnen 109 versehen. Auf ihrer Innenseite weist diese Riemenraupe 9 eine im Querschnitt trapezförmige, keilriemenartige Längsrippe 509 auf, die z.B. aus einem inseitig auf dem Flachriemen 209 befestigten, insbesondere geklebten Keilriemen bestehen kann. Die inseitige, keil= riemenförmige Längsrippe 509 der Riemenraupe 9 ist mit Verstärkungseinlagen und mit quergerichteten Kerben 609 zur Erhöhung der Biegsamkeit versehen.

Die untere Laufrolle 10 und die beiden oberen Umlenkrollen (Antriebsrolle 11 und Spannrolle 12) der Raupe 9 sind als Keilriemenrollen ausgebildet, d.h. mit einer im Querschnitt trapezförmigen Umfangsnut 35 versehen, wie insbesondere in Fig. 5 für die Antriebsrolle 11 dargestellt ist. In diese Umfangsnut 35 greift form- und kraftschlüssig die inseitige, keilriemenartige Längsrippe 509 der Riemenraupe 9 ein. Im Bereich der beiden V-förmig geneigten, vor und hinter der Laufrolle 10 liegenden Raupenabschnitte ist die Riemenraupe 9 auf ihrer Innenseite von federnden Gleitführungen 36 abge= stützt, die aus je einem am Fahrwerkrahmen 1 befestigen, flach U-förmigen, aussenseitig mit einem Gleitbelag 236 ver= sehenen Führungsbügel 136 bestehen, wie insbesondere auch in Fig. 4 dargestellt ist. Die Riemenraupe 9 liegt mit der Innenseite ihres Flachriemens 209 beiderseits der inseitigen, keilriemenartigen Längsrippe 609 gegen den Gleitbelag 236 der ebenen Aussenfläche jedes Führungsbügels 136 an. Die inseitige, keilriemenartige Längsrippe 609 der Riemenraupe 9 greift berührungslos in eine mittlere längsgerichtete Aus= nehmung 336 des Führungsbügels 136 ein.

An der in Bezug auf die Fahrrichtung hinteren d.h. der Lenkstange 3 entsprechenden Seite des Fahrwerkrahmens 1 ist ein Stützbeinpaar 37 vorgesehen, das um eine quergerichtete Achse 38 schwenkbar gelagert ist und einen Handgriff 39 aufweist. Mit Hilfe dieses Handgriffs 39 kann das Stütz= beinpaar 37 wahlweise in eine nach oben geschwenkte, vom Boden gelöste, in Fig. 1 strichpunktiert dargestellte Fahr= stellung und in eine nach unten geschwenkte, auf dem Boden aufliegende, in Fig. 1 und 2 mit vollen Linien dargestellte Abstützstellung gebracht werden. In der Abstützstellung des Stützbeinpaares 37 ist die erfindungsgemässe Handkarre ohne andere Stützhilfe standfest. Beim Fahren wird das Stütz= beinpaar in seine Fahrstellung geschwenkt und die erfindungs= gemässe Handkarre wird schubkarrenähnlich mit Hilfe der Lenkstange 3 und der beiden Handgriffe 4 gehalten, geführt und gelenkt. Das Lenken der Handkarre erfolgt dabei bequem und leicht nur mit Hilfe der Lenkstange 3, wie bei einer herkömmlichen Schubkarre, da sich die erfindungsgemässe Handkarre nur im Bereich der einzigen Laufrolle 10 in einer kleinen mittleren Auflagefläche der in Querrichtung konvex bogenförmig profilierten Aussenseite der Riemenraupe 9 auf dem Boden abstützt. Gleichzeitig wird die Handkarre motorisch über die Riemenraupe 9 angetrieben. Die V-förmig vor und hinter der Laufrolle 10 nach oben gerichteten Abschnitte der Raupe 9 ermöglichen ein müheloses Befahren von sowohl anstei= genden als auch absteigenden Treppen, steilen Hängen od. dgl. Dabei klettert die Handkarre mit dem entsprechend geneigten vorderen bzw. hinteren Raupenabschnitt die Treppe hinauf bzw. hinunter. Im Bereich des jeweils belasteten geneigten Raupenabschnitts wird die Raupe 9 von der betreffenden Gleitführung 36 gegenüber dem Fahrwerkrahmen 1 abgestützt.

In den Kasten 2 der Handkarre kann zum Transportieren von Flüssigkeiten ein Flüssigkeitsbehälter 40 eingesetzt werden, der den Kasten 2 nur teilweise oder - wie in dem in Fig. 6 dargestellten Ausführungsbeispiel - ganz ausfüllt. Dieser Flüssigkeitsbehälter 40 kann durch eine untere seitliche Öffnung 102 des Kastens 2 hindurch über einen Schlauch 41 mit einer Pumpe 42 verbunden werden, die mit der Zapfwelle 18 getrieblich gekuppelt und auf der Aussenseite des Getriebekastens 116 befestigt werden kann. Mit dieser Pumpe 42 kann bei stationär mit Hilfe des Stützbeinpaars 37 aufgestellter Handkarre Flüssigkeit in den Behälter 40 gepumpt bzw. aus dem Behälter 40 verspritzt werden.

Die Erfindung ist selbstverständlich nicht auf das dargestellte und beschriebene Ausführungsbeispiel beschränkt. So z.B. können die beiden geneigten Raupenabschnitte vor und hinter der Laufrolle 10 durch Rollenführungen statt durch Gleitführungen 36 abgestützt werden. Der Kasten 2 der Handkarre braucht nicht - wie beim dargestellten Ausführungsbeispiel - ganz über dem Fahrwerkrahmen 1 bzw. der mittleren Raupe 9 zu liegen, sondern kann sich zumindest teilweise beiderseits des Fahrwerkrahmens 1 bzw. der Raupe 9 nach unten erstrecken. In einer nicht dargestellten Ausführungsvariante des Raupenfahrwerks können die Laufrolle 10, die Antriebsrolle 11 und die Umlenkrolle 12 zur Aufnahme von zwei oder drei nebeneinanderliegenden Einzelraupen ausgebildet sein und insbesondere zwei oder drei Umfangsnuten 35 aufweisen. Statt einer einzigen Raupe 9 können dann zwei oder drei endlose, nebeneinanderliegende Einzelraupen benutzt werden, von denen eine bzw. zwei nur um die Laufrolle 10 und die Antriebsrolle 11 und eine weitere nur um die Laufrolle 10 und die Umlenkrolle 12 umgeführt sind. Bei dieser Ausführungsform werden also die beiden geneigten, V-förmig vor und hinter der Laufrolle 10 liegenden Raupen= abschnitte von mindestens je einer betreffenden, endlosen Einzelraupe gebildet, wobei mindestens eine dieser geneigten Einzelraupen motorangetrieben ist.

0047951

<u>Patentansprüche</u>

1. Schubkarrenartige Handkarre mit motorangetriebenem Raupenfahrwerk, das zur Überwindung von Treppen und anderen stufenförmigen Hindernissen ausgebildet ist, dadurch gekennzeichnet, dass das Raupenfahrwerk eine einzige, untere, mittig angeordnete Laufrolle (10) mit mindestens einer um diese herumgeführten Raupe (9) und sowohl auf der Vorderseite als auch auf der Hinterseite dieser Laufrolle (10) geneigte, sich V-förmig nach oben erstreckende Raupenabschnitte aufweist.

2. Handkarre nach Anspruch 1, dadurch gekennzeichnet, dass eine einzige endlose Raupe (9) auf einer dreieckförmigen Umlaufbahn um die mittlere untere Laufrolle (10) und um zwei obere, im Abstand voneinander und von der Laufrolle (10) angeordnete Umlekrollen (11, 12) herumgeführt ist, wobei die sich von der Laufrolle (10) beiderseits nach oben erstreckenden Seiten der dreieckförmigen Raupenumlaufbahn die V-förmig angeordneten Raupenabschnitte des Raupenfahrwerks bilden und mindestens eine Umlenkrolle (11) als Antriebsrolle ausgebildet ist.

3. Handkarre nach Anspruch 1, dadurch gekennzeichnet, dass um die mittlere untere Laufrolle (10) mindestens zwei endlose, nebeneinanderliegende Einzelraupen herumgeführt sind, von denen mindestens eine um eine höher liegende, nach vorn versetzte Umlenkrolle (11) und mindestens eine um eine höher liegende, nach hinten versetzte Umlenkrolle (12) herumgeführt sind, wobei diese geneigte Einzelraupen die V-förmig angeordneten Raupenabschnitte des Raupenfahrwerks bilden und mindestens eine Umlenkrolle (11) als Antriebsrolle ausge= bildet ist.

4. Handkarre nach Anspruch 1 bis 3, dadurch gekennzeichnet, dass die beiden Umlenkrollen (11, 12) etwa in der selben Höhe und in gleichen Abständen von der senkrechten, durch die Achse der Laufrolle (10) gehenden Querebene angeordnet sind.

5. Handkarre nach einem der Ansprüche 1 bis 4, dadurch gekennzeichnet, dass das Antriebsaggregat (Antriebsmotor 14, Getriebe 16) des Raupenfahrwerks, in dem Raum zwischen den beiden geneigten, ausgehend von der Laufrolle (10) V-förmig nach oben gerichteten Raupenabschnitten angeordnet ist.

6. Handkarre nach einem der Ansprüche 1 bis 5, dadurch ge= kennzeichnet, dass jede Raupe, insbesondere die einzige, auf einer dreieckförmigen Umlaufbahn geführte Raupe (9) als Riemenraupe mit im Querschnitt konvex bogenförmigem Aussen= profil ausgebildet ist.

7. Handkarre nach Anspruch 6, dadurch gekennzeichnet, dass die Riemenraupe (9) auf ihrer Aussenseite mit quergerichte= ten Zähnen (109) versehen ist.

8. Handkarre nach Anspruch 6 oder 7, dadurch gekennzeichnet, dass die Riemenraupe (9) auf ihrer Innenseite eine im Quer= schnitt trapezförmige Längsrippe (509) aufweist, die keil= riemenartig in je eine entsprechende, im Querschnitt trapezförmige Umfangsnut (35) der Laufrolle (10) und der Umlenkrollen (11 bzw. 12) eingreift.

9. Handkarre nach einem der Ansprüche 6 bis 8, dadurch gekennzeichnet, dass die Riemenraupe (9) bzw. ihre inseitige Längsrippe (509) auf ihrer Innenseite quergerichtete Kerben (609) zur Erhöhung der Biegsamkeit aufweist.

10. Handkarre nach einem der Ansprüche 1 bis 9, dadurch gekennzeichnet, dass das Antriebsaggregat (Antriebsmotor 14, Getriebe 16) des Raupenfahrwerks eine auch bei ausgeschaltetem Antrieb des Raupenfahrwerks antreibbare Zapfwelle (18) aufweist.

11. Handkarre nach einem der Ansprüche 1 bis 10, dadurch gekennzeichnet, dass der Kasten (2) zur Aufnahme eines Flüssigkeitsbehälters (40) ausgebildet bzw. zumindest teilweise durch einen Flüssigkeitsbehälter ersetzbar ist, wobei dieser Flüssigkeitsbehälter (40) z.B. über einen Schlauch (41) mit einer am Antriebsaggregat (Getriebekasten 116) befestigbaren, mit der Zapfwelle (18) getrieblich kuppelbaren Pumpe (42) verbindbar ist.

12. Handkarre nach einem der Ansprüche 1 bis 11, dadurch gekennzeichnet, dass zumindest auf ihrer in Bezug auf die Fahrrichtung hinteren Seite eine wahlweise in eine vom Boden angehobene Fahrstellung und in eine auf dem Boden aufliegende Abstützstellung einstellbare Stütze (38, 39) angeordnet ist.

0047951

13. Handkarre nach einem der Ansprüche 1 bis 12, gekenn= zeichnet durch eine sowohl in ihrer Höhenlage als auch in ihrer Winkelstellung einstellbare Lenkerstange (3).

Fig.1

Fig.3

Fig.4

Fig.2

Fig.5

Fig.6